# EUROPEAN PATENT SPECIFICATION

(11) **EP 1 612 385 B1**
(45) Date of publication and mention of the grant of the patent: **16.04.2008**
(21) Application number: 04015180.5
(22) Date of filing: 29.06.2004
(51) Int. Cl.: F02B 37/18, F01N 3/28

(54) **Compact turbine and waste-gate design**
Kompakter Entwurf einer Turbine und eines Abblaseventils
Conception compacte d'une turbine et d'une soupape de décharge

(43) Date of publication of application: 04.01.2006
(73) Proprietor: Ford Global Technologies, LLC, Dearborn, MI 48126 (US)
(72) Inventor: Wallesten, Johan, 416 69 Göteborg (SE)
(74) Representative: Hammond, Andrew David

(56) References cited:
- DE-A- 19 503 748
- DE-A- 19 654 026
- PATENT ABSTRACTS OF JAPAN vol. 2002, no. 10, 10 October 2002 (2002-10-10) & JP 2002 161738 A (TOYOTA MOTOR CORP), 7 June 2002 (2002-06-07)
- PATENT ABSTRACTS OF JAPAN vol. 0112, no. 15 (M-606), 11 July 1987 (1987-07-11) & JP 62 032225 A (MAZDA MOTOR CORP), 12 February 1987 (1987-02-12)

## Description

### Technical field

The present patent application relates to an exhaust gas turbine for an exhaust gas turbocharger and in particular an exhaust gas turbine for exhaust gas turbochargers in automotive vehicles providing for a compact design providing an even flow of gases towards a Close Coupled Catalytic converter in accordance with the preamble of claim 1.

### Background of the invention

Turbo charger are used to increase power density of combustion engines. In gasoline engines, the boost pressure after the compressor must be controlled to avoid knock. A waste-gate valve controls the flow rate in the turbine and thus the compressor power.

In a typical turbine/waste-gate design, the turbine outlet and the waste-gate enter into a small volume, which leads down to a Close Coupled Catalytic converter. There are three problems with this design. First, the sudden area step from the turbine outlet to the volume causes pressure losses, which decrease the turbine efficiency. Second, the waste-gate, when open, releases the exhaust gases in a very un-even flow pattern. This will cause the Close Coupled Catalytic converter to be un-evenly utilized if placed close to the turbine. Third, the cast iron housing containing the waste-gate valve mechanism cools the exhausts during cold-starts leading to unnecessarily long light-off time for the Close Coupled Catalytic converter.

One such device is previously known through US 4 499 731, in which is described an exhaust gas turbocharger, which has a movable control piston in a turbine casing. The piston is made up of a circular cylindrical body, subjected to exhaust gas pressure, or external pressure and a volute body. The volute body has substantially the cross section of the inlet volute space and adjusts the volume of the latter to the current exhaust gas flow in order to achieve optimum torque variation over the load range of the engine. The exhaust gas turbocharger has a turbine casing. A rotor is partially surrounded by an outlet diffuser having a circular cylindrical outer surface. Concentric with this, the turbine casing has a circular cylindrical bore and the circular cylindrical space between the surfaces of this bore and the outer surface is closed at the outlet end of the diffuser by a cylinder end. Furthermore, this circular cylindrical space contains a control piston. The piston separates the inlet volute space from a rear cylinder space.

One such device is previously known through DE 195 037 48 A, in which is described a turbocharger comprising a diffuser, which is located at the outlet of the turbine of the turbocharger. A catalytic converter or a soot filter is directly connected to an outlet of the diffuser. The diffuser is also connected to the exhaust pipe via a bypass pipe. The diffuser duct has a plurality of circular apertures allowing at least part of the exhaust coming from the bypass pipe to flow into the diffuser.

A few disadvantages with the arrangement known from the prior art mentioned above is that it is complex and thus likely to incur high costs, the proposed design likely to cool the exhaust gases during cold-starts leading to long light-off time for an associated Close Coupled Catalytic converter.

### Summary of the invention

One object of the invention is to provide an improved compact design that is favorable for the turbine and in particular an improved compact design providing for an even flow of gases towards an associated Close Coupled Catalytic converter, while addressing the problems described in relation to the prior art device.

This object is achieved in accordance with the features of claim 1.

Thanks to the provision of an outer housing enclosing the diffuser outlet and having an outlet, a waste-gate valve arranged to communicate with the source of exhaust gases and selectively pass excess exhaust gases into the outer housing, and at least one opening arranged to allow excess exhaust gases to mix with exhaust gases from the turbine within the enclosure provided by the outer housing the above described problems are eliminated, an even flow of gases towards an associated Close Coupled Catalytic converter can be achieved, low end torque increased and pumping losses reduced.

Preferred embodiments are listed in the dependent claims.

### Description of drawings

In the following, the invention will be described in greater detail with reference to attached drawings, in which:

Fig. 1 shows a simplified side view section of an exhaust gas turbine for an exhaust gas turbocharger in accordance with the present invention.

Fig. 2 is a simplified partial side view section of an alternative configuration of the exhaust gas turbine for an exhaust gas turbocharger in accordance with the prior art.

Fig. 3 is a simplified partial side view section of another alternative configuration of the exhaust gas turbine for an exhaust gas turbocharger in accordance with the prior art.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

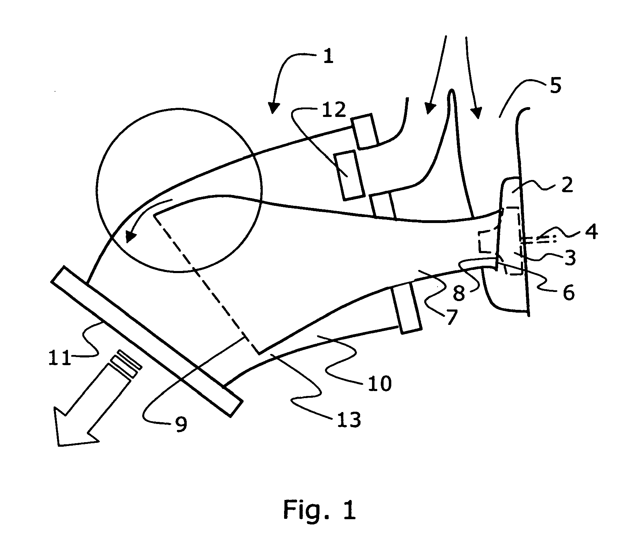

As illustrated in figure 1 an exhaust gas turbine 1 for an exhaust gas turbocharger in accordance with the present invention comprises a turbine casing 2, which surrounds a turbine wheel 3 that is mounted on a rotor shaft 4 and which turbine casing 2 has an inlet 5 that is connectable to a source of exhaust gases (not shown) and which turbine casing 2 further has an outlet 6. In operation exhaust gases from the source of exhaust gases, such as an internal combustion engine, flow through the inlet 5 of the turbine casing 2, causes the turbine wheel 3 to rotate and thus propel a compressor (not shown) of the exhaust gas turbocharger, after which the exhaust gases leaves the turbine casing 2 through the outlet 6.

In order to increase low-end torque and decrease pumping losses a diffuser duct 7 is arranged at the outlet 6 of the turbine casing 2, which diffuser duct 7 has an inlet 8 connected to the outlet 6 of the turbine casing 2 and which diffuser duct 7 further has an outlet 9. In order to avoid excessive cooling of the exhaust gases, e.g. during cold-starts, it is preferred that the diffuser duct 7 is a sheet-metal duct arranged to shield the exhaust gases from the surrounding in order to minimize heat losses, especially during cold starts.

An outer housing 10 is arranged such that it encloses a substantial part of the diffuser duct 7 and in particular the diffuser duct outlet 9. The outer housing 10 is sealed against the diffuser duct 7 at an end of the outer housing 10 facing essentially towards the turbine casing 2 and the outer housing 10 further has an outlet 11 at an end of the outer housing 10 facing essentially away from the turbine casing 2. In order to minimize pressure losses, the cross section of the diffuser duct outlet 9 is arranged to correspond to the cross section of the outlet 11 of the outer housing 10, e.g. if both the diffuser duct outlet 9 and the outlet 11 of the outer housing 10 have circular cross-sections, the diffuser duct outlet 9 and the outlet 11 of the outer housing 10 have essentially the same diameters. In order to ensure a minimization of pressure losses the diffuser duct outlet 9 should match the cross section of a duct (not shown) arranged to pass the exhaust gases on to a Close Coupled Catalytic converter (not shown). It is preferred that the outer housing 10 is shaped such that even distribution of excess exhaust gases around the diffuser duct 7 is promoted, thus promoting an even utilization of the associated Close Coupled Catalytic converter.

A waste-gate valve 12 is arranged to communicate with the source of exhaust gases and selectively pass excess exhaust gases into the outer housing 10 in order to control the flow rate in the turbine 1 and thus the compressor power. In order to promote for an even flow into the associated Close Coupled Catalytic converter, it is preferred that the waste-gate valve 12 is arranged to pass excess exhaust gases into the outer housing 10 at a location as remote from the outlet 11 of the outer housing 10 as possible, i.e. as far up-stream as possible. Because such a preferred sheet-metal diffuser duct 7 as described above shields the outer housing 10 and waste-gate valve 12 mechanism, a shorter light-off time for the associated Close Coupled Catalytic converter is provided for.

An opening 13 between the outer housing 10 and the diffuser duct 7 is arranged to allow excess exhaust gases passed though the waste-gate valve 12 to mix with exhaust gases from the turbine 1 within the enclosure provided by the outer housing 10. As is illustrated in figure 1 the opening 13 arranged to allow excess exhaust gases to mix with exhaust gases from the turbine 1 is an annular opening between the diffuser duct outlet 9 and the outer housing 10.

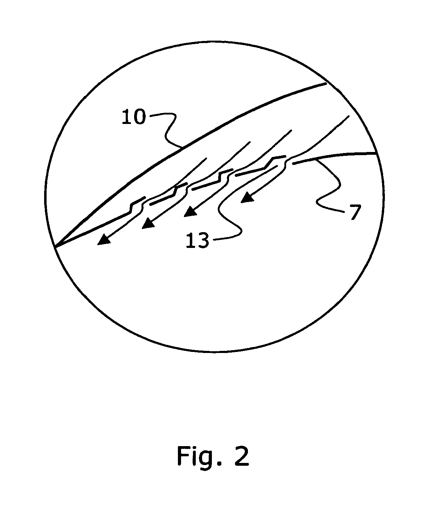

According to a prior art document, as illustrated in figure 2, which shows an alternative known construction of the encircled section of figure 1, the diffuser duct 7 connect with the outer housing 10 at the rim of the diffuser duct outlet 9 and a plurality of openings 13 are arranged to allow excess exhaust gases in the outer housing 10 to pass through the diffuser duct 7 and mix with exhaust gases from the turbine 1. The mixing of gases takes place within the enclosure provided by the outer housing 10. As illustrated in figure 2, the plurality of openings 13 in accordance with this known construction consist of a plurality of slots through the diffuser duct 7. The flow of exhaust gases is illustrated by the arrows.

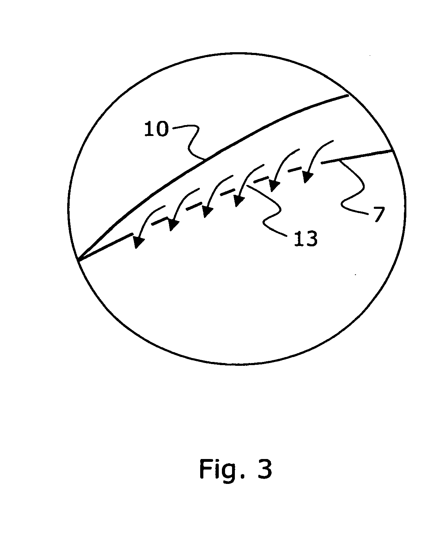

In accordance with another prior art document, as illustrated in figure 3, which shows an alternative known construction of the encircled section of figure 1, the diffuser duct 7 connect with the outer housing 10 at the rim of the diffuser duct outlet 9, in the same way as in the second embodiment, and a plurality of openings 13 are arranged to allow excess exhaust gases in the outer housing 10 to pass through the diffuser duct 7 and mix with exhaust gases from the turbine 1. The mixing of gases takes place within the enclosure provided by the outer housing 10. As illustrated in figure 3, the plurality of openings 13 in accordance with this second known construction consist of a plurality of holes through the diffuser duct 7. The flow of exhaust gases is illustrated by the arrows.

It is obvious to the person skilled in the art that the above openings 13, although described as slots or holes through the diffuser duct 7, these slots and holes can be provided with appropriate geometries to provide for desired flow and gas distribution properties.

The present invention provides for an exhaust gas turbine 1 for an exhaust gas turbocharger of compact design, the length of which does not need to be in excess of the diffuser duct 7 length, thus it is possible to fit an associated Close Coupled Catalytic converter very close to the diffuser duct outlet 9.

It is further envisaged that the present invention encompasses an automotive vehicle comprising an exhaust gas turbine 1 in accordance with any of the above described embodiments or any foreseeable combination thereof as claimed in claim 1.

The invention is not limited to the above-described embodiments, but may be varied within the scope of the following claims.

## Claims

1. An exhaust gas turbine (1) for an exhaust gas turbocharger, comprising:
a turbine casing (2) surrounding a turbine wheel (3) that is mounted on a rotor shaft (4) and having an inlet (5) that is connectable to a source of exhaust gases and having an outlet (6);
a diffuser duct (7) having an inlet (8) connected to the outlet (6) of the turbine casing (2) and having an outlet (9);
an outer housing (10) enclosing the diffuser outlet (9) and having an outlet (11);
a waste-gate valve (12) arranged to communicate with the source of exhaust gases and selectively pass excess exhaust gases into the outer housing (10);
at least one opening (13) arranged to allow excess exhaust gases to mix with exhaust gases from the turbine (1) within the enclosure provided by the outer housing (10);
**characterized in that** the at least one opening (13) arranged to allow excess exhaust gases to mix with exhaust gases from the turbine (1) is an annular opening (13) between the diffuser duct outlet (9) and the outer housing (10).

2. An automotive vehicle,
**characterized in that** it comprises an exhaust gas turbine (1) according to claim 1.

## Patentansprüche

1. Abgasturbine (1) für einen Abgasturbolader, die umfasst:
ein Turbinengehäuse (2), das ein an einer Rotorwelle (4) angebrachtes Turbinenrad (3) umgibt und einen Einlass (5), der mit einer Quelle für Abgase verbunden werden kann, sowie einen Auslass (6) besitzt;
ein Diffusorrohr (7), das einen Einlass (8), der mit dem Auslass (6) des Turbinengehäuses (2) verbunden ist, sowie einen Auslass (9) besitzt;
ein Außengehäuse (10), das den Diffusorauslass (9) umgibt und einen Auslass (11) besitzt;
ein Ladedrucksteuerventil (12), das so angeordnet ist, dass es mit der Quelle für Abgase in Verbindung steht und wahlweise überschüssige Abgase in das Außengehäuse (10) durchlässt; und
wenigstens eine Öffnung (13), die so angeordnet ist, dass sie ein Vermischen der überschüssigen Abgase mit den Abgasen von der Turbine (1) innerhalb der durch das Außengehäuse (10) geschaffenen Umschließung zulässt, **dadurch gekennzeichnet, dass** die wenigstens eine Öffnung (13), die so angeordnet ist, dass sie das Vermischen überschüssiger Abgase mit Abgasen von der Turbine (1) zulässt, eine ringförmige Öffnung (13) zwischen dem Diffusorrohr-Auslass (9) und dem Außengehäuse (10) ist.

2. Kraftfahrzeug,
**dadurch gekennzeichnet, dass** es eine Abgasturbine (1) nach Anspruch 1 enthält.

## Revendications

1. Turbine à gaz d'échappement (1) pour un turbocompresseur à gaz d'échappement, comprenant :
un carter de turbine (2) entourant une roue de turbine (3) qui est montée sur un arbre rotor (4) et ayant une entrée (5) qui peut être reliée à une source de gaz d'échappement, et ayant une sortie (6) ;
un conduit diffuseur (7) ayant une entrée (8) reliée à la sortie (6) du carter de turbine (2) et comportant une sortie (9) ;
un boîtier externe (10) renfermant la sortie de diffuseur (9) et comportant une sortie (11) ;
une soupape de décharge des gaz d'échappement (12) agencée de manière à communiquer avec la source des gaz d'échappement et à faire passer sélectivement les gaz d'échappement excédentaires à l'intérieur du boîtier externe (10) ;
au moins une ouverture (13) agencée de manière à permettre aux gaz d'échappement excédentaires de se mélanger aux gaz d'échappement provenant de la turbine (1) à l'intérieur de l'enceinte fournie par le boîtier externe (10), **caractérisée en ce que** ladite au moins une ouverture (13) agencée de manière à permettre aux gaz d'échappement excédentaires de se mélanger aux gaz d'échappement provenant de la turbine (1) est une ouverture annulaire (13) située entre la sortie du conduit diffuseur (9) et le boîtier externe (10).

2. Véhicule automobile, **caractérisé en ce qu'**il comprend une turbine à gaz d'échappement (1) selon la revendication 1.
